# EUROPEAN PATENT APPLICATION

(11) **EP 1 291 550 A1**
(43) Date of publication of application: **12.03.2003**
(21) Application number: 01922025.0
(22) Date of filing: 23.04.2001
(51) Int. Cl.: F16F 13/26

(54) **CONTROL TYPE LIQUID SEAL VIBRATION CONTROL DEVICE**

(30) Priority: 16.06.2000 JP 2000181421
(71) Applicant: TOYO TIRE & RUBBER CO., LTD ., Nishi-ku, Osaka-shi, Osaka 550-0002 (JP)
(72) Inventor: ITOH, Masaaki, c/o Toyo Tire & Rubber Co. Ltd., Osaka-shi, Osaka 550-0002 (JP); TAKASHIMA, Yukio, c/o Toyo Tire & Rubber Co. Ltd., Osaka-shi, Osaka 550-0002 (JP)
(74) Representative: Strehl Schübel-Hopf & Partner
(86) International application number: JP0103481
(87) International publication number: WO01096760

(57) **Abstract**

The invention provides a control type liquid-sealed vibration-proof device, with which to reduce dynamic spring rate in wide-ranging frequency bands and obtain stable product characteristics by bringing a membrane facing a switchover chamber into stepwise contact with a wall surface to put into constraint. To that end, between a vibration-insulating base (2) and a diaphragm (4) connected through a main body fitting (1), a partition division (10) including a partition proper (15), a partition plate (16), and a partition-bearing bottom plate (17) is fitted, to compart the interior into a main liquid chamber (7) and a first subsidiary liquid chamber (8). On the main liquid chamber side of the partition proper (15) having therein a first orifice (13), a membrane (11) is disposed to form a switchover chamber (12) capable of changing over the introduction of a negative pressure and the atmospheric pressure, and a second subsidiary liquid chamber (9) and a second orifice (14) are formed by pressing the peripheral portion of membrane (11) with the partition plate (16). The wall surface (20) of the switchover chamber (12) facing the membrane (11) is provided with steps so that by the introduction of negative pressure into the chamber the membrane (11) may come, from its outer periphery stepwise, into contact with the wall surface to be constrained.

## Description

### Technical Field

This invention relates to a control type of liquid-sealed vibration-proof device, which is used for supporting and bearing a power unit such as automobile engine, etc. in a vibration-absorbing manner.

### Background Art

Heretofore as a liquid-sealed vibration-proof device used as mounts for supporting and bearing an automobile engine or similar vibrators so as not to transmit the vibrations to the vehicle body, there have been proposed switchover controlling type of ones, wherein vibration-proof characteristics are adapted to be changed over in response to two kinds of vibrations differing in frequency region, e.g., shaking vibration and idling vibration.

For example, JP Patent Publication No. 1998-274279 A1 discloses a control type of liquid-sealed vibration-proof device which is comprised of an attachment fitting on the vibration source side, a cylindrical fitting on the support side, a vibration-insulating base of thick-walled rubber elastomer interposed between the former two, a diaphragm fitted to the cylindrical fitting so as to be opposed to the vibration-insulating base, and a partition division disposed between the diaphragm and the vibration-insulating base. And a main liquid chamber is formed between the partition division and the vibration-insulating base; a first subsidiary liquid chamber is formed between the partition division and the diaphragm so as to communicate through a first orifice with the main liquid chamber; a second subsidiary liquid chamber is formed in the partition division on the main chamber side to communicate through a second orifice with the main liquid chamber; and a switchover chamber partitioned by a rubber membrane (diaphragm) to the second subsidiary chamber is formed to be able to introduce either of the atmospheric pressure and negative pressure by switchover.

With the proposed vibration-proof device, by switchover between the introduction of a negative pressure and the introduction of the atmospheric pressure, the rubber membrane facing the switchover chamber is brought into contact with the wall surface thereof and put under constraint (immovable state) or released from the constraint (movable state) and by selectively utilizing the first orifice to the first subsidiary liquid chamber and the second orifice to the second subsidiary liquid chamber, two vibrations different in frequency range, namely, shaking vibration and idling vibration are effectively attenuated.

Furthermore, according to the preceding vibration-proof device, the switchover chamber is formed in a concave manner on the wall surface of the partition, either of the rubber membrane facing the switchover chamber and the concave wall surface facing the switchover chamber is formed with a projecting portion so that upon introduction of a negative pressure, a small space may remain between the rubber membrane and the wall surface, whereby relatively high frequency vibrations such as muffled sound are also effectively damped.

Here, the rubber membrane has a free length made longer than the cross-sectional length of the wall surface formed to be concave so as to form the small space between the concave wall surface and the rubber membrane when a negative pressure is introduced into the switchover chamber. This extra rubber membrane causes resonance vibration, thereby reducing the dynamic spring rate in a predetermined frequency band.

Therefore it is difficult to stabilize the free length and area of the resonating rubber membrane, to obtain reliable product characteristics without dispersion, and further to change stepwise the resonance characteristics.

In view of the problems of the above-mentioned control type of liquid-sealed vibration-proof device, this invention has been accomplished and therefore is aimed at reducing the dynamic spring rate in a wide range of frequency bands and at obtaining stabilized product characteristics by bringing the rubber membrane facing the switchover chamber stepwise into contact with the wall surface of the switchover chamber to put under constraint.

### Disclosure of Invention

The invention solving the aforementioned problems generally consists in a control type liquid-sealed vibration-proof device comprising a vibration-insulating base made of rubber elastomer, a first attachment fitting connected to the vertically one side of the vibration-insulating base, a cylindrical main body fitting connected to the other side of the vibration-insulating base, a diaphragm attached to the main body fitting to oppose to the vibration-insulating base, a partition division partitioning the interior between the vibration-insulating base and the diaphragm into a main liquid chamber on the vibration-insulating base side and a first subsidiary liquid chamber on the diaphragm side and including a membrane, a switchover chamber, formed on the main liquid chamber side of the partition division, capable of changing over the introduction of the atmospheric pressure and a negative pressure, a second subsidiary liquid chamber between the switchover chamber and the membrane, and a first and a second orifices putting the main liquid chamber into communication with the first and the second subsidiary liquid chambers respectively. And the device is characterized in that either of the membrane and the wall surface of the switchover chamber opposed to the membrane is contoured in differentiated steps so that by the introduction of a negative pressure into the switchover chamber, the membrane may be brought, stepwise from its circumference in order, into contact with the wall surface and put under constraint.

According to the liquid-sealed vibration-proof device, it is possible to utilize selectively the first orifice to the first subsidiary liquid chamber and the second orifice to the second subsidiary liquid chamber by changing over the introduction of a negative pressure and the introduction of the atmospheric pressure thereby making the membrane in contact with the wall surface of the switchover chamber facing it to put under constraint or putting under non-constraint. Thus it is possible to adapt to two vibrations different in vibrational frequency band, for example, shaking vibration and idling vibration.

More particularly, when a negative pressure is introduced into the switchover chamber, the membrane facing the switchover chamber comes into contact with the wall surface of the switchover chamber stepwise from the outer circumference in order, owing to the provision of differentiated steps and ultimately is constrained. That is, it is possible to vary stepwise the contact area of the membrane with the wall surface, and further to vary the area (movable area) of a residual non-constraint portion according to the magnitude of negative pressure introduced (the degree of diminished pressure). Consequently the elastic modulus and resonance frequency of the membrane can be selectively varied, so that the dynamic spring rate in a wider range of frequency bands can be further decreased.

In the preceding liquid-sealed vibration-proof device, it is preferred that the wall surface of the switchover chamber be formed in a concave manner in a nearly curved form and that either of the wall surface and the membrane, for example, the wall surface be provided with differentiated steps so that the clearance between the wall surface and the membrane in non-constraint state may become stepwise larger from the outer circumference toward inboard. By that construction, a stepwise constraint of the membrane by the contact with the wall surface can be performed smoothly.

The aforesaid differentiated steps may resort to providing either curved surfaces of different radii of curvature or curved surfaces whose centers of radii of curvature are mutually deviated on the wall surface.

Furthermore it is preferred to form, on the wall surface of the switchover chamber, grooves for preventing the membrane from clinging thereto, the wall surface being a concave surface.

### Brief Description of Drawings

Fig. 1 is a longitudinal sectional view showing one example of a control type liquid-sealed vibration-proof device according to this invention;
Fig. 2 is an exploded perspective view showing respective elements constituting a partition division in the device in Fig. 1;
Fig. 3 is an exploded sectional view similar to Fig. 2 showing the elements of the partition division;
Fig. 4 is an illustration in cross-section showing the form of steps;
Fig. 5 is an illustration in-cross-section showing another example of the form of steps; and
Fig. 6 is an illustration in cross-section showing further example of the form of steps.

### Best Mode for Carrying Out the Invention

The form of practice of this invention will be hereinafter described in more detail with reference to the accompanying drawings.

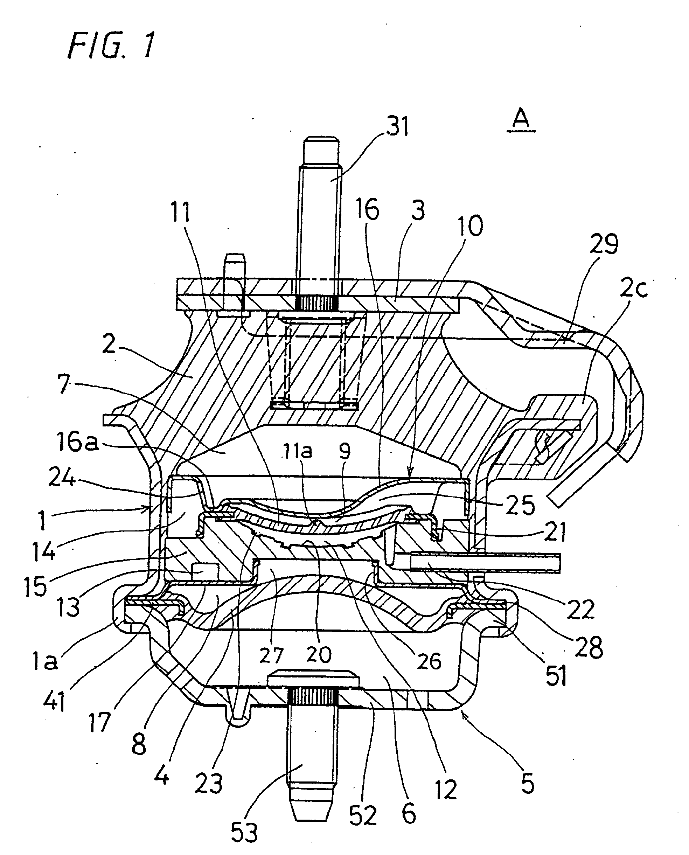

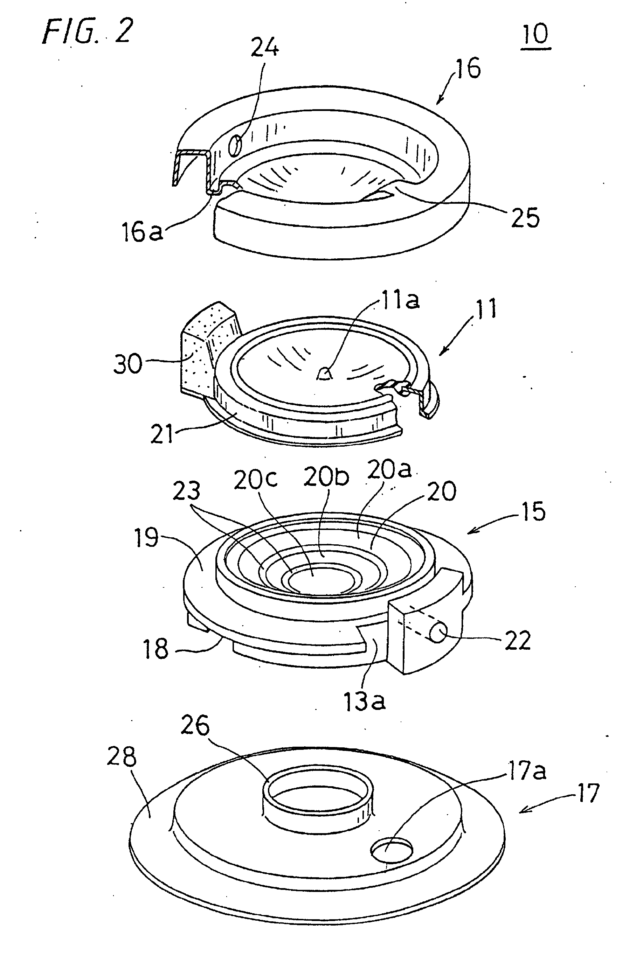

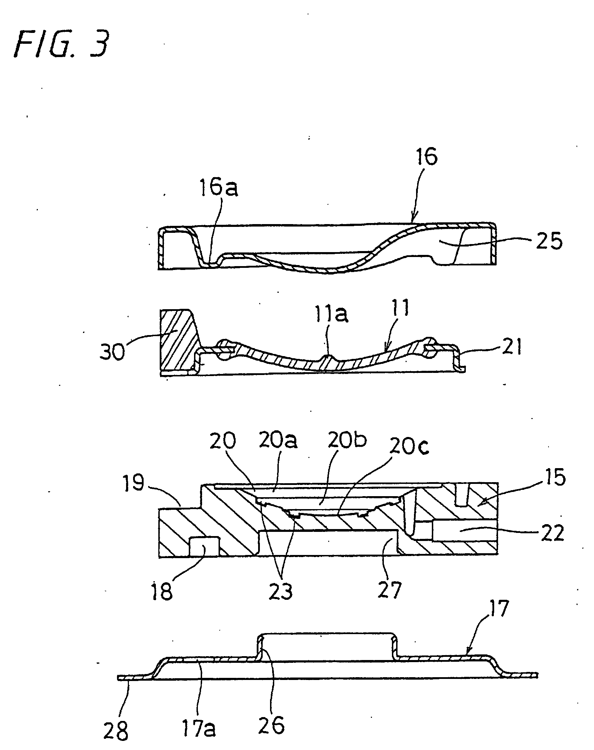

Fig. 1 is a sectional view showing one example of a control type liquid-sealed vibration-proof device pertaining to this invention; Fig. 2 is an exploded perspective view showing respective constituent elements of a partition division in Fig. 1; Fig. 3 is a sectional view of Fig. 2; and Fig. 4 to Fig. 6 are sectional illustrations showing the forms of steps formed on a concave wall surface of a partition proper.

In the liquid-sealed vibration-proof device A, a vibration-insulating base 2 made of rubber elastomer undergoing thereon a load from a power unit such as engine is connected to the upper open side of a cylindrical main body fitting 1, and a first attachment fitting 3 is connected to the top end of the vibration-insulating base 2. Stated another way, the main body fitting 1 and the first attachment fitting 3 are connected to each other through the vibration-insulating base 2. In Fig. 1 the vibration-insulating base 2 assumes a generally truncated conical shape, and the top end of its upper small-diameter side is airtightly fastened by vulcanization bonding means to the first attachment fitting 2 while the outer circumference of its lower large-diameter side, likewise to the opening of the main body fitting 1.

On the lower open side of the main body fitting 1, a diaphragm 4 made of rubber membrane opposed to the vibration-insulating base 2 and a second attachment fitting 5 covering the outside of the diaphragm 4 are fixed in a sealing state by crimping means, as will be described below. The reference numeral 41 designates an annular reinforcing element bonded by vulcanization to the diaphragm 4.

The first attachment fitting 3 is generally disc-formed and provided, at its central position, with an attachment bolt 31 projecting upwardly, which is fixed by press-fitting means or welding means thereto, so as to be secured to an automobile power unit.

The second attachment fitting 5 assumes a generally bottomed cylinder form and its flange-like open edge 51 is fixed, at a lower end 1a of the main body fitting 1, together with the partition division, which will be described below, by crimping. The second attachment fitting 5 is provided at its bottom wall 52 with an attachment bolt 53 projecting downwardly by press fitting, etc. so as to be positioned and fixed to a vehicle body side member. It is naturally possible to attach and fix the bolt through another attachment bracket. The interior between the second attachment fitting 5 and the diaphragm 4 constitutes an air chamber 6. The air chamber 6 may be put into communication with the atmosphere, or otherwise may be rendered airtight.

In the inner periphery of the main body fitting 1 between the vibration-insulating base 2 and the diaphragm 4, a partition division 10 is fitted airtightly through a sealed rubber layer 2a, which is formed integrally with the vibration-insulating base 2. An interior space between the vibration-insulating base 2 and the diaphragm 4 is sealed with liquid and comparted by the partition division 10, thereby forming a main liquid chamber 7 between the vibration-insulating base 2 and the partition division 10 and forming a first subsidiary liquid chamber 8 between the diaphragm 4 and the partition division 10.

At the partition division 10, on the main liquid chamber 7 side, there are further formed a switchover chamber 12 capable of changing over the introduction of the atmospheric pressure and a negative pressure and a second subsidiary liquid chamber 9 partitioned by a rubber membrane 11 from the switchover chamber 12. The main liquid chamber 7 and the first and second subsidiary chambers 8, 9 are put in communication with each other through a first and a second orifices 13, 14 which are different in resistance to liquid passage. In the figure, the first subsidiary liquid chamber 8 communicates with the first orifice 13 having a larger resistance to liquid passage (smaller sectional area) whereas the second subsidiary liquid chamber 9 communicates with the second orifice 14 having a smaller resistance to liquid passage (larger sectional area).

The partition division 10 is, as shown in Figs. 1 to 3, made up of a partition proper 15, a partition plate 16, a partition-bearing bottom plate 17, etc. and constructed as follows:

The partition proper 15 is formed of a rigid material, such as metal, e.g., aluminum or synthetic resin and assumes a generally disc shape as shown in Fig. 2. Its outer peripheral portion is formed with a recess 18 for orifice at the underside. The recess 18 is delimited by the partition-bearing bottom plate 17 and the main body fitting 1, whereby serving as the first orifice 13 putting the main liquid chamber 7 and the first subsidiary liquid chamber 8 into communication with each other. In the outer peripheral position of the partition proper 15 there is formed a communication portion 13a bringing the first orifice 13 and the main liquid chamber 7 into communication with each other.

The upside of the partition proper 15 on the main liquid chamber 7 side is formed, at the outer peripheral part, with a depressed portion 19 partly cutout constituting the bottom of the second orifice and, at the central part, with a concave curved wall surface 20 having a predetermined radius of curvature. The membrane 11 is attached in a manner covering the concave curved wall surface 20, whereby forming the interior as the switchover chamber 12 that maintains a clearance. The membrane 11 is, at its outer circumference, provided with an annular collar fitting 21 fixed by vulcanization adhesion means, and the collar fitting 21 is attached to the partition proper 15 by being press fitted to the inner periphery inboard of the partly cutout depressed portion 19 at the outer periphery. The reference numeral 11a is a projection for preventing the membrane 11 from faying the partition plate 16, which will be hereinafter described.

The switchover chamber 12 is connected to a switchover means (not shown) such as a valve capable of changing over and connecting either to a negative pressure source or an atmospheric pressure source, through a communication path 22 that pierces through the partition proper 15 laterally and leads to the outside of the lateral side of the main body fitting 1. The switchover means is adapted to be able to selectively introduce either an optional negative pressure or the atmospheric pressure by the operation of command signals or the like from a control means.

On the wall surface 20 facing the membrane 11 of the switchover chamber 12 and formed in a concave manner, there are formed such differentiated step surfaces or projections that a clearance between the wall surface 20 and the non-constraint membrane 11 becomes stepwise larger from the outer periphery to inboard so that by the introduction of a negative pressure into the switchover chamber 12, the membrane 11 may come stepwise in order from its outer circumference to inboard into contact with the wall surface to be put under constraint. The reference numerals 20a, 20b, 20c show respective step surfaces at the outer peripheral part, an intermediate part and the central part of the wall surface, respectively.

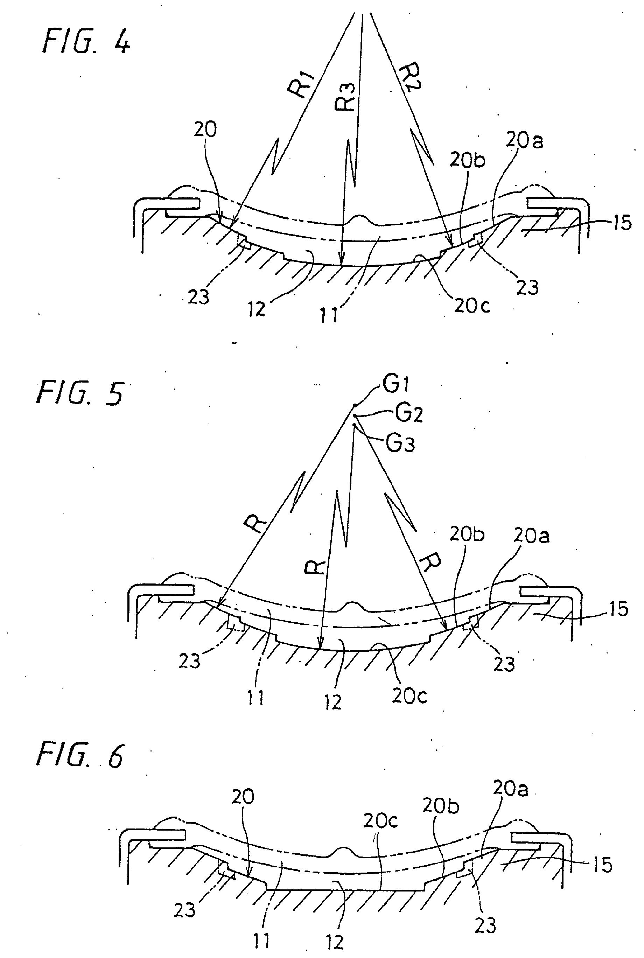

As for the form or profile of the steps, the step surfaces 20a, 20b, 20c on the wall surface 20 formed in a concave manner can be made to have differentiated radii of curvature R₁, R₂, R₃, in this order, of a common curvature radius center, as shown in an enlarged view of Fig. 4. For instance it is possible to differentiate and increase the radii of curvature from the outer peripheral part to the central part in order by a difference on the order of 0.3 to 0.8 mm, preferably approximately 0.5 mm. That is, the radii of curvature of the step surfaces are set to be in the relation of R₁< R₂ < R₃ whereby the step surfaces 20a, 20b, 20c can be stepwise differentiated.

Alternatively, it is also possible to deviate the positions of the centers G₁, G₂, G₃ of radius of curvature of the step surfaces 20a, 20b, 20c on the wall surface 20 from the outer peripheral to the central part in order, for example, by a similar difference to the preceding radius difference value, whereby it is possible to differentiate the step surfaces 20a, 20b, 20c by curvature surfaces of a required radius of curvature R. In this case, it is not necessary to differentiate the radii of curvature, but a slight differentiation in radius of curvature R is acceptable, similarly to the case of Fig. 4.

As a further alternative shown in Fig. 6, it is possible to form the step surfaces 20a, 20b, 20c as taper surfaces and a flat surface thereby to differentiate them slightly, as in the abovementioned case. Aside from the examples above, it is also possible to differentiate the steps by ring-like projections, and yet the preceding examples of the steps are preferred from the aspect of a stability of the membrane 11 in its contact state.

On the concave wall surface 20 of the switchover chamber 12, a groove or grooves 23 are provided in a ring form or in a radial form to avoid the clinging of the membrane 11 thereto and the communication path 22 is put in communication partly with the groove 23. Where the differentiated steps are formed on the wall surface 20 at the ring-like boundary of the groove or grooves 23, the membrane 11 can come in smooth contact with the steps and accordingly their constraint state is stabilized.

On the other hand, the differentiation of steps may also be made on the surface of the membrane 11 facing the switchover chamber 12 by curved surfaces of required radii of curvature or tapered steps or by projections all corresponding to the wall surface 20 curved in a concave manner, although not shown. Yet from the practical aspect of carrying the invention into effect, it is better to provide the wall surface 20 with the differentiated steps as described above.

The partition plate 16 is a press formed product from mainly steel plate and is formed of an annular lower projection 16a. The partition plate 16 is press fitted and received, at its inner periphery, into the main body fitting 1, with the peripheral portion of the membrane 11 pressed by the projection 16a in a sealing manner, and thus retained in place by being pinched between the partition proper 15 and the inner periphery of the vibration-insulating base 2.

By that construction, the space between inboard of the projection 16a and the membrane 11 is formed as the second subsidiary liquid chamber 9 while the space outboard delimited by the partly cutoff depressed portion 19 of the partition proper 15 and the partition plate 16 is formed as the second orifice 14 having a relatively large sectional area, the second orifice putting the main liquid chamber 7 and the second subsidiary liquid chamber 9 into communication with each other through a communication hole 24 and a communication portion 25, respectively. The reference numeral 30 in Fig. 2 designates a partition wall for preventing the shortcut of the second orifice 14. The partition wall 30 is made of rubber and fixed to the collar fitting 21 by vulcanization bonding means.

The first orifice 13 as mentioned above is in communication with the main liquid chamber 7 through the communication hole of the second orifice 14. That is, the first orifice 13 and the second orifice 14 share the incoming and outgoing port to the main liquid chamber 7 with each other.

The partition-bearing bottom plate 17 is likewise a press formed product of a steel plate, and is of a donut-like disk having an opening at its center and a slightly larger diameter than the partition proper 15. An edge 26 of the opening at the center of the bottom plate 17 is press fitted in a recessed portion 27 of the partition proper 15 at the central underside on the first subsidiary liquid chamber 8 side. An outer peripheral portion 28 of the partition-bearing bottom plate 17 extends outboard of the partition proper 15 and is fixed simultaneously by crimping to the lower end 1a of the main body fitting 1 together with the reinforcing element 41 of the diaphragm 4 and the open edge 51 of the second attachment fitting 5. The partition-bearing bottom plate 17 is provided with a communication hole 17a partly conforming to the recess 18, whereby the first orifice 13 communicates with the first subsidiary liquid chamber 8.

In the example as illustrated, the vibration-insulating base 2 has, in a part of circumference at its large diameter side, an overhang portion 2c reinforced with a part of the main body fitting 1 and besides, a stabilizer 29 fastened to the first attachment fitting 2 by joint fastening means such as nuts is partly disposed in the vicinity of above and below the overhang portion 2c so as to perform a stopper action for restraining an excessive vertical displacement upon large displacement.

According to the liquid-sealed vibration-proof device constructed in this manner, when a vibration is imparted from a vibratory body side such as power unit to it, the vibration-insulating base 2 undergoes deformation, as a result of which the liquid in the main liquid chamber 7 flows out or in between the first and the second subsidiary liquid chambers 8, 9 through the first and the second orifices 13, 14, respectively, so that the vibration is attenuated in response to the respective resonance characteristics.

At that time, by changing over the introduction of a negative pressure and the introduction of the atmospheric pressure at the switchover chamber, the membrane 11 facing the switchover chamber 12 is made in contact with the wall surface 20 of the switchover chamber 12 to be put under constraint state or put into a non-constraint state, whereby it is possible to selectively utilize the first orifice 13 leading to the first subsidiary liquid chamber 8 and the second orifice 14 to the second subsidiary liquid chamber 9. Thus the device is able to adapt to vibrations at two different frequency bands, such as the shaking vibration and idling vibration.

For instance, in the situation where the atmospheric pressure is introduced into the switchover chamber 12, the membrane 11 separates from the wall surface 20 of the switchover chamber 12 and is in a movable, non-constraint condition by the input of vibration. At that time, since the second orifice 14 has a larger sectional area and a smaller resistance to liquid passage as compared with the first orifice 13, liquid passes mainly between the main liquid chamber 7 and the second subsidiary liquid chamber 9. It is thus possible to damp effectively such vibration of a frequency band that the damping action by the second orifice 14 is adapted to be effectively performed, for example, idling vibration.

On the other hand, when a negative pressure is introduced in the switchover chamber 12, the membrane 11 is sucked toward the wall surface 20 of the switchover chamber 12, as it is introduced, to come into contact with the wall surface 20 and constrained. Once the membrane 11 is put under constraint, the liquid no longer flows through the second orifice 14, but flows between the main liquid chamber 7 and the first subsidiary liquid chamber 8 through the first orifice 13. Consequently it is possible to effectively attenuate such vibration of a frequency band that the damping action by the first orifice 13 is adapted to be effectively performed, for example, shaking vibration.

Moreover either of the wall surface 20 and the membrane 11, for example, the wall surface 20 in the figures is provided with differentiated step surfaces so as to come, from the outer periphery to inboard in order, into contact to be constrained, and as such, with the introduction of a negative pressure into the switchover chamber 12, the membrane 11 comes, from the outer periphery in order, into contact with the step surfaces 20a, 20b, 20c to be stepwise constrained, ultimately contacting entirely with them.

As a consequence, it is possible to vary stepwise the contact area of the membrane 11 with the wall surface 20 and further, a residual non-constraint area (movable area) in conformity with the negative pressure introduced and also possible to selectively vary the elastic modulus and resonance frequency of the membrane 11. Therefore, taking advantage of the dependency on the negative pressure and the dependency on the frequency of the membrane 11, dynamic spring rate in a wide range of frequency bands responsive to the vehicle speed can be reduced.

As described above, according to the control type of liquid-sealed vibration-proof device of this invention, it is possible to reduce the dynamic spring rate in a wide range of frequency bands and to obtain stabilized product characteristics by making the membrane facing the switchover chamber stepwise into contact with the wall surface thereby to put under constraint.

### Industrial Applicability

The control type of liquid-sealed vibration-proof device of this invention can be used suitably for supporting and bearing a power unit such as automobile engine, etc. in a vibration-proofmanner.

## Claims

1. A control type liquid-sealed vibration-proof device which comprises a vibration-insulating base made of a rubber elastomer, a first attachment fitting connected to the vibration-insulating base on the vertically one side thereof a cylindrical main body fitting connected to the vibration-insulating base on the other side thereof, a diaphragm attached to the main body fitting so as to oppose to the vibration-insulating base, a partition division partitioning an interior enclosed between the vibration-insulating base and the diaphragm into a main liquid chamber on the vibration-insulating base side and a first subsidiary chamber on the diaphragm side and including a membrane and a partition proper, a switchover chamber surrounded by the partition proper and the membrane, capable of switching over the introduction of the atmospheric pressure and a negative pressure, a second subsidiary liquid chamber spaced apart from the switchover chamber through the membrane, and a first orifice and a second orifice through which to put the main liquid chamber into communication with the first and the second subsidiary liquid chambers, respectively,
which device is **characterized in that** either of the membrane and a wall surface of the switchover chamber opposed thereto is provided with differentiated steps so that by the introduction of a negative pressure into the switchover chamber the membrane may come, stepwise from its outer circumference in order, into contact with the wall surface to be put under constraint.

2. The control type liquid-sealed vibration-proof device as set forth in claim 1, wherein the wall surface of the switchover chamber is configured in a concave manner and generally in a curved form, and either of the wall surface and the membrane is provided with differentiated steps so that a clearance between the wall surface and the membrane in non-constraint state may be stepwise larger from the outer peripheral portion of the membrane toward inboard.

3. The control type liquid-sealed vibration-proof device as set forth in claim 1 or 2, wherein the wall surface of the switchover chamber is provided with the steps differentiated by curved surfaces having different radii of curvature.

4. The control type liquid-sealed vibration-proof device as set forth in claim 1 or 2, wherein the wall surface of the switchover chamber is provided with the steps differentiated by curved surfaces whose centers of curvature radii are deviated.

5. The control type liquid-sealed vibration-proof device as set forth in claim 1 or 2, wherein the wall surface, profied in a concave curved manner, of the switchover chamber is defined with grooves for preventing the membrane from clinging thereto.
